# EUROPÄISCHE PATENTSCHRIFT

(11) **EP 3 028 689 B1**
(45) Veröffentlichungstag und Bekanntmachung des Hinweises auf die Patenterteilung: **19.10.2016**
(21) Anmeldenummer: 15194762.9
(22) Anmeldetag: 16.11.2015
(51) Int. Cl.: A61G 21/00, B60R 13/01

(54) **INNENAUSBAU EINES BESTATTUNGSFAHRZEUGS**
INTERIOR OF A BURIAL VEHICLE
STRUCTURE INTERNE DE CORBILLARD

(30) Priorität: 03.12.2014 DE 202014105834 U; 09.03.2015 DE 202015101177 U
(43) Veröffentlichungstag der Anmeldung: 08.06.2016
(73) Patentinhaber: Schmidt, Udo, 48734 Reken (DE)
(72) Erfinder: Schmidt, Udo, 48734 Reken (DE)
(74) Vertreter: Habbel, Ludwig

(56) Entgegenhaltungen:
- EP-A1- 0 595 287
- EP-A1- 1 106 440
- DE-A1- 19 949 798
- DE-U1-202012 102 758

## Beschreibung

Die Erfindung betrifft einen Innenausbau im Sargraum eines Bestattungsfahrzeugs.

Zusätzlich zu den Flächen der Fahrzeugkarosserie, die hinter der Fahrerkabine eines Bestattungsfahrzeugs einen Innenraum schaffen, indem sie den dortigen sogenannten Sargraum umgeben, wird dieser Sargraum durch Flächenelemente begrenzt, die innerhalb der Karosserie fest installiert werden und als Innenausbau bezeichnet werden. Der Innenausbau kann glattflächigere Wände des Sargraums aufweisen, als es die Innenflächen der Fahrzeugkarosserie ermöglichen, wenn die zum Beispiel mit Rippen, Streben oder ähnlichen Verstärkungselementen versehen sind. Aus der Praxis ist es bekannt, den Innenausbau eines Bestattungsfahrzeugs mit Hilfe von Holzwerkstoffplatten vorzunehmen. Dabei handelt es sich um jeweils im Wesentlichen plane Platten, die dort, wo Flächen des Innenausbaus in unterschiedlichen Winkeln aneinander grenzen, mit Hilfe von Profilelementen miteinander verbunden sind.

Als "im Wesentlichen plan" werden im Rahmen des vorliegenden Vorschlags die entsprechenden Wandabschnitte auch dann bezeichnet, wenn sie in vergleichsweise großen Radien leicht gebogen sind, beispielsweise indem sie dem Verlauf der Fahrzeugkarosserie in aufrechter Richtung folgen.

Die Profilelemente können beispielsweise einen etwa H-förmigen Querschnitt aufweisen, also zwei gegenüberliegende Einstecknuten aufweisen, die zur Aufnahme jeweils einer der Holzwerkstoffplatten vorgesehen sind. Andere Profilelemente können einen rechtwinkligen Anschluss der Platten ermöglichen, beispielsweise indem die Einstecknuten nicht gegenüberliegend, sondern im rechten Winkel zueinander angeordnet sind. Und wenn zwei Platten rechtwinklig aneinander stoßen und eine Außenecke bilden, kann diese mittels eines Profilelements abgedeckt werden, welches einen etwa L-förmigen Querschnitt aufweist, so dass einerseits ein mechanischer Schutz der Ecke bewirkt wird und andererseits der Anblick einer offenen Schnittkante einer der Platten vermieden werden kann, auch ohne die beiden Platten auf Gehrung sägen zu müssen. Zudem bewirken die Profilelemente in sämtlichen Fällen eine Abdeckung der Schnittkanten der Platten, so dass geringe Unregelmäßigkeiten der Plattenkanten dort, wo zwei Platten aneinanderstoßen, durch die Profilelemente verdeckt werden.

Der Erfindung liegt die Aufgabe zugrunde, einen gattungsgemäßen Innenausbau dahingehend zu verbessern, dass dieser ein möglichst hochwertiges Erscheinungsbild bietet, problemlos sehr gründlich gereinigt werden kann und sehr wirtschaftlich herstellbar ist sowie eine Vielzahl von optischen Gestaltungsmöglichkeiten bietet.

Diese Aufgabe wird durch einen Innenausbau nach Anspruch 1 gelöst. Vorteilhafte Ausgestaltungen sind in den Unteransprüchen beschrieben.

Die Erfindung schlägt mit anderen Worten vor, keine Holzwerkstoffplatte zu verwenden, sondern vielmehr eine Sandwichplatte, die eine Oberflächenschicht aus Metall und einen Kern aus Kunststoff aufweist. Die Sandwichplatte besteht zumindest aus diesen beiden Schichten. Die Oberflächenschicht ist dabei mechanisch höher belastbar als der Kern, so dass sie zum Innenraum des Sargraums gerichtet ist und somit später die dem Auge zugängliche sichtbare Oberfläche des Innenraums bildet, so dass diese Oberflächenschicht auf der so genannten Sichtseite der Sandwichplatte angeordnet ist.

Vorschlagsgemäß ist dabei vorgesehen, zwei aneinander grenzende Wandabschnitte nicht durch zwei separate Sandwichplatten herzustellen, sondern aus ein und derselben Sandwichplatte zu bilden. Zu diesem Zweck ist entlang der herzustellenden Kante auf der Rückseite der Sandwichplatte, also auf der Seite, die von der Sichtseite abgewandt ist, eine Fräslinie vorgesehen. Diese Fräslinie verringert nicht nur die beim Abkanten der Sandwichplatte aufzubringenden Kräfte, sondern sie definiert auch den Verlauf der Kante ohne weitere Hilfsmittel, so dass die Sandwichplatte freihändig gebogen werden kann. Vorteilhaft können natürlich bei der Herstellung des Innenausbaus Schablonen oder andere Kanthilfen verwendet werden, um den Kantvorgang der Sandwichplatte definiert ausführen zu können und beispielsweise mit großer Wiederholgenauigkeit Abkantungen in stets demselben Winkel zu erzeugen.

Dadurch, dass die Fräslinie auf der Rückseite der Sandwichplatte verläuft, wird eine geschlossene Sichtseite auf beiden Wandabschnitten und insbesondere auch im Kantenbereich geschaffen. Dies ist im Unterschied zu der Verwendung spezieller Profilleisten eine deutliche Verbesserung im ästhetischen Erscheinungsbild des Innenausbaus. Zudem wird so eine glatte, ununterbrochene Oberfläche im Bereich der Kante ermöglicht, die dementsprechend problemlos gereinigt werden kann.

Sandwichplatten, die vorschlagsgemäß für den Innenausbau im Sargraum eines Bestattungsfahrzeugs verwendet werden können, sind handelsüblich und dementsprechend problemlos und wirtschaftlich zu beschaffen. Sie sind beispielsweise unter der Handelsbezeichnung "DIBOND" marktüblich und nicht nur in einer Vielzahl von serienmäßigen Oberflächendekoren erhältlich, sondern können auch bedruckt werden, mit einer Folie oder einem Furnier bezogen werden, also foliert oder furniert werden, so dass letztlich eine sehr große Vielfalt an Oberflächen mittels derartiger Sandwichplatten verwirklicht werden kann.

Ein weiterer Vorteil des vorschlagsgemäßen Innenausbaus und der dabei vorgesehenen Verwendung der Sandwichplatten liegt darin, dass eine Vielzahl unterschiedlicher Dekore, nämlich eine praktisch unbegrenzte Anzahl unterschiedlicher Dekore, verfügbar ist. Handelsübliche Dekorflächen, beispielsweise Dekorfolien aus Kunststoff, oder mit einem Dekor versehenen Holzwerkstoffplatten, sind aufgrund von wechselnden Moden üblicherweise nur für eine bestimmte Zeitdauer verfügbar. Die Vorschlagsgemäß vorgesehenen Sandwichplatten hingegen können unmittelbar bedruckt werden, beispielsweise wenn sie mit einer neutralen, beispielsweise weißen Sichtseite angeliefert werden. Es besteht für den Fahrzeughersteller also die Möglichkeit, bestimmte Dekore zu digitalisieren, beispielsweise zu fotografieren, oder von vornherein digital zu erstellen. Weiterhin besteht die Möglichkeit, digital vorliegende Dekore zu verfremden oder zu personalisieren. Im Reparaturfall bei einem Fahrzeug, dessen Innenausbau-Dekor nicht mehr handelsüblich lieferbar ist, kann beispielsweise eine intakte Dekorfläche des Fahrzeugs digitalisiert werden und davon ausgehend eine Sandwichplatte mit diesem bzw. einem daraus abgeleiteten Dekor bedruckt werden, z. B. indem das digitalisierte Dekor gespiegelt wird.

Dadurch, dass bei der Herstellung des Innenausbaus nicht wie bislang üblich Kantenumleimer an den einzelnen Wandabschnitten verwendet werden müssen, kann die Fertigungszeit erheblich reduziert werden. Die Körperkanten, die sich im Bereich zweier winklig aneinander grenzender Wandabschnitte ergeben, sind nicht nur optisch und haptisch vorteilhaft gerundet, sondern auch feuchtigkeitsdicht. Dies ermöglicht eine problemlose, schnelle und gleichzeitig gründliche Reinigung.

Eine derartig leicht und gründlich zu reinigende Ausgestaltung des Innenausbaus im Sargraum eines Bestattungsfahrzeugs wäre auch mittels einer einteiligen schalenartigen bzw. wannenartigen Konstruktion erzielbar, z. B. in Form einer Schale aus einem Faserverbundstoff wie GfK. Eine derartige Schale könnte sämtliche einzelnen Flächenabschnitte des Innenausbaus monolithisch in sich vereinen, so dass fugenlose Übergänge zwischen sämtlichen Flächenabschnitten dieses Innenausbaus gewährleistet wären. Im Vergleich dazu kann der vorschlagsgemäße Innenausbau allerdings erheblich wirtschaftlicher und vielseitiger hergestellt werden, weil es - abgesehen von dem erheblich geringeren Zeitaufwand bei der Herstellung - keiner speziellen Form bedarf, wie sie zur Herstellung einer GfK-Schale üblicherweise verwendet wird. Insbesondere wären für unterschiedliche Fahrzeugmodelle unterschiedliche derartige Schalen erforderlich, und dementsprechend auch unterschiedliche Formen. Der vorschlagsgemäße Innenausbau erfordert jedoch lediglich die einmalige Bestimmung, wie die Fräslinien verlaufen sollen. Nach diesem Muster - beispielsweise abgespeichert als ein Programm zur Ansteuerung einer automatischen Fräsanlage - können anschließend wiederholgenau beliebig viele gleichartige Innenausbauten hergestellt werden, und eine Anzahl unterschiedlicher Programme, beispielsweise angepasst an unterschiedliche Fahrzeugmodelle, erfordert lediglich den entsprechenden Speicherplatz in der Steuerung der Fräsanlage, im Unterschied zu dem erheblichen Platzbedarf in einer Firmenhalle, den eine Mehrzahl der erwähnten unterschiedlichen Formen zur Herstellung der unterschiedlichen GfK-Schalen erfordern würde.

Vorteilhaft kann auf der Rückseite der Sandwichplatte eine zweite Oberflächenschicht aus Metall vorgesehen sein, wie dies bei dem erwähnten Handelsprodukt "DIBOND" der Fall ist. Hierdurch wird der Sandwichplatte bei geringer Materialstärke im einstelligen Millimeter-Bereich, z.B. etwa 3 bis 6 mm, ein hohes Maß an Stabilität und Eigensteifigkeit vermittelt. Die Fräslinie entlang der Kante zwischen den beiden Wandabschnitten erstreckt sich in diesem Fall durch die zweite Oberflächenschicht.

In einer ersten Ausgestaltung kann vorgesehen sein, dass der Innenausbau zwei starr miteinander verbundene Wandabschnitte aufweist, wie dies mit Hilfe der erwähnten "DIBOND"-Platten möglich ist. Die Fräslinie erstreckt sich dabei vorteilhaft nicht nur durch die eine Oberflächenschicht, sondern bis in den Kern hinein. Durch die entsprechende Konturgestaltung der Fräslinie kann der Biegeradius der Sandwichplatte beeinflusst werden, so dass an unterschiedlichen Stellen des Innenausbaus problemlos unterschiedliche Biegeradien geschaffen werden können, unter Verwendung entweder ein und derselben Sandwichplatte oder zumindest unter Verwendung gleichartiger Sandwichplatten, ohne dass für die unterschiedlichen Biegeradien unterschiedliche Sandwichplatten als Halbzeuge bevorratet werden müssten. Vielmehr kann auf einer einzigen Sandwichplatte zunächst mittels einer Oberfräse ein Linienmuster an Fräslinien geschaffen werden, ggf. mit unterschiedlichen Linienkonturen durch Verwendung unterschiedlicher Fräsköpfe, so dass anschließend diese Sandwichplatte in eine vergleichsweise komplexe, ggf. dreidimensionale Formgebung gefaltet werden kann und nicht zur zwei, sondern mehrere Wandabschnitte, von denen jeweils zwei im Winkel aneinander grenzen, aus derselben Sandwichplatte geschaffen werden können. Hierdurch wird nicht nur der Zeitaufwand für die Erstellung des Innenausbaus wirtschaftlich vorteilhaft beeinflusst, nämlich reduziert, sondern auch die Vorteile der geschlossenen Ausgestaltung des Innenraums mit möglichst wenig Trennfugen und insbesondere unter Vermeidung von sichtbaren Profilleisten wird hierdurch in besonderem Maße erreicht.

Zu Gunsten der Stabilität des fertig gestellten Innenausbaus kann vorteilhaft vorgesehen sein, dass im Bereich der Fräslinie der Kern nicht vollständig entfernt wird, bis auf die Oberflächenschicht der Sichtseite hin, sondern dass vielmehr der Kern im Bereich der Fräslinie eine verbleibende Materialstärke aufweist, im Vergleich zur üblichen Schichtdicke also eine reduzierte Materialstärke. Je nach der verbleibenden Materialstärke beeinflusst der Kern den Kraftaufwand, der zum Kanten der Sandwichplatte erforderlich ist sowie die Gleichmäßigkeit des Kantenverlaufs, beispielsweise zu Gunsten einer gleichmäßigen Rundung im Kantenbereich mit einem vorbestimmten Biegeradius.

In einer zweiten Ausgestaltung kann eine vorschlagsgemäß vorgesehene Sandwichplatte nicht zu Gunsten eines besonders steifen und stabilen Innenausbaus ausgestaltet sein, sondern vielmehr einen Kern aus einem bewusst elastischen und mehrfach hin und her biegbaren Kunststoff aufweisen. In diesem Fall kann die Sandwichplatte im Innenausbau des Bestattungsfahrzeugs dazu genutzt werden, ein Scharnier zu schaffen, indem die beiden Wandabschnitte entlang der Kante mit einer Fräslinie versehen sind, so dass im Bereich dieser Kante die beiden Oberflächenschichten vom Kern entfernt sind. Der elastische mehrfach hin und her biegbare Kunststoff bewirkt somit die Ausbildung eines Scharniers zwischen den beiden Wandabschnitten, wobei im Unterschied zu anderen Scharniergestaltungen für Verschmutzungen anfällige Spalten vermieden werden und weder auf der Innenseite noch auf der Außenseite des Scharniers hinderliche Überstände geschaffen werden noch durch eine besonders wulstige Ausgestaltung des Scharniers selbst eine störende Verdickung geschaffen wird. Die Vereinfachung und Zeitersparnis bei der Herstellung des Innenausbaus kann beispielsweise dadurch optimiert werden, dass eine Klappe oder eine Tür, die an eine Fläche des Innenausbaus anschließt, nicht separat montiert zu werden braucht, sondern vielmehr durch einen Abschnitt derselben Sandwichplatte gebildet wird, welche auch die erwähnte Fläche des Innenausbaus bildet.

Aber auch wenn separate Elemente als Türen oder Klappen eingesetzt werden, können diese vorteilhaft durch eine der Vorschlagsgemäß verwendeten Sandwichplatten gebildet sein: in diesem Fall kann die erwähnte Scharnierlinie die Sandwichplatte in zwei Abschnitte beiderseits der Scharnierlinie aufteilen. Ein Abschnitt ist als vergleichsweise schmale Leiste bemessen, die neben der Scharnierlinie verläuft und als Montageleiste dient. Beispielsweise können Schrauben durch diese Montageleiste geschraubt werden, um die gewünschte Tür bzw. Klappe an anderen Elementen des Innenausbaus zu befestigen. Eine praktisch unsichtbare Befestigung kann ermöglicht werden, wenn statt der Schrauben Klebstoff verwendet wird, so dass die Montageleiste der Sandwichplatte mit ihrer für den Betrachter nicht sichtbaren Rückseite an ein anderes Element des Innenausbaus angeklebt werden kann. Der zweite, demgegenüber größere Abschnitt der Sandwichplatte bildet die eigentliche Klappe bzw. Tür, beispielsweise das sogenannte Türblatt, welches geöffnet und geschlossen werden kann, also um die Scharnierlinie geschwenkt werden kann, während die Montageleiste der Sandwichplatte stets ortsfest verbleibt.

Besonders vorteilhaft kann eine solche Tür bzw. Klappe durch die Sandwichplatte mit der darin geschaffenen Scharnierlinie gebildet sein, wenn das Türblatt selbst vergleichsweise schmal ausgestaltet ist und bezogen auf die Länge der Scharnierlinie sich deutlich weniger weit quer zur Scharnierlinie erstreckt als in Längsrichtung der Scharnierlinie. Auf diese Weise wird die Belastung, die auf die elastisch verformbare mittlere Schicht der Scharnierplatte einwirkt, gering gehalten, zugunsten der Lebensdauer der entsprechenden Klappe bzw. Tür. Beispielsweise kann die Tür eines Staufachs auf diese Weise ausgestaltet sein: aus der Praxis ist bekannt, zwischen der Fahrerkabine und dem Sargraum ein Staufach anzuordnen, welches entweder nur hinter dem Beifahrersitz vorgesehen ist oder sich über die gesamte Fahrzeugbreite des Bestattungsfahrzeugs erstreckt. Das Staufach ist üblicherweise von der Fahrzeugseite her zugänglich, und die dafür vorgesehene Tür erstreckt sich über eine Höhe, je nach Fahrzeugtyp, von etwa 1 m oder mehr, während die Breite des Türblatts beispielsweise im Bereich von etwa 10 bis 20 cm liegt. Diese Staufach-Tür ist als Teil des Innenausbaus im Inneren des Bestattungsfahrzeugs vorgesehen und erst zugänglich, nachdem eine Karosserie-Tür geöffnet worden ist, beispielsweise eine seitliche Schiebetür des Bestattungsfahrzeugs.

Bei dem für die eine und/oder andere Oberflächenschicht verwendeten Metall kann vorteilhaft Aluminium verwendet werden, also eine Aluminiumlegierung, so dass einerseits eine hervorragende Witterungsbeständigkeit ermöglicht wird, wie sie im Fahrzeugbau vorteilhaft ist und so dass andererseits das Aluminium serienmäßig z. B. durch Eloxierung mit unterschiedlichen dekorativen Oberflächen ausgestaltet sein kann.

Vorteilhaft kann der Kern der Sandwichplatte aus Polyethylen bestehen, welches hervorragend mit den Oberflächenschichten verbunden werden kann und ein hohes Maß an Beständigkeit gegenüber chemischen und mechanischen Belastungen aufweist.

Die Verformbarkeit der vorschlagsgemäß verwendeten Sandwichplatten ermöglicht bei Einbringen mehrerer Fräslinien die Ausgestaltung regelrecht bombierter Bereiche, also konkav oder konvex gewölbter Bereiche, so dass innerhalb einer größeren Fläche des Innenausbaus eine beispielsweise in den Sargraum ragende Wölbung geschaffen werden kann oder eine Mulde ähnlich wie eine Mauernische.

Vorteilhaft kann diese Verformbarkeit genutzt werden, um eine Wölbung in der Sandwichplatte zu schaffen, die eine Einbuchtung in der erwähnten größeren Fläche des Innenausbaus bildet. In dieser Einbuchtung können Gegenstände angeordnet werden. Dabei ist eine Abdeckung vorgesehen, welche die Einbuchtung verdeckt, welche jedoch entfernt werden kann, um den Zugang zu der Einbuchtung und zu den dort befindlichen Gegenständen zu ermöglichen, oder um den freien Blick auf einen Gegenstand zu ermöglichen, welcher in der Einbuchtung angeordnet ist.

Vorteilhaft kann eine solche Einbuchtung in einer Trennwand angeordnet sein, die den Sargraum nach vorn hin begrenzt, also zu einer Fahrerkabine des Bestattungsfahrzeugs hin. In an sich bekannter Weise kann der Sargraum unmittelbar an die Fahrerkabine grenzen oder an ein Staufach, welches zwischen Fahrerkabine und Sargraum vorgesehen ist. Die Einbuchtung in der Trennwand kann beispielsweise so groß bemessen sein und einen annähernd horizontalen Boden bilden, so dass sie zur Aufnahme einer Urne genutzt werden kann. Wenn bei Kondolenzfahrten ein Sarg im Sargraum angeordnet ist, kann die Abdeckung vor der Einbuchtung angeordnet sein und vorzugsweise mit einem Schmuckmotiv versehen sein, so dass die Abdeckung als dekoratives Element wahrgenommen wird. Sollte keine Abdeckung vorgesehen sein, kann bei derartigen Kondolenzfahrten ein dekoratives Element in der Einbuchtung selbst angeordnet sein, beispielsweise eine Kerze oder eine vergleichbare Leuchte. Wenn jedoch eine Kondolenzfahrt nicht mit einem Sarg, sondern mit einer Urne durchgeführt werden soll, kann die Abdeckung entfernt werden und die Urne in der Einbuchtung angeordnet werden. Auf diese Weise ist die gewünschte Umrüstung des Bestattungsfahrzeugs innerhalb kürzester Zeit möglich, wobei diese vorteilhafte Umrüstbarkeit auch bei anderen für den Innenausbau eines Bestattungsfahrzeugs genutzten Materialien ermöglicht werden kann, wenn in einer großen Fläche des Innenausbaus, beispielsweise in der erwähnten Trennwand, die entsprechende Einbuchtung geschaffen wird.

Ein Ausführungsbeispiel der Erfindung wird anhand der rein schematischen Darstellungen nachfolgend näher erläutert. Dabei zeigt
- Fig. 1: einen perspektivischen Blick von hinten in den Sargraum eines Bestattungsfahrzeugs,
- Fig. 2: in gegenüber Fig. 1 vergrößertem Maßstab einen Ausschnitt der Situation von Fig. 1,
- Fig. 3: einen Anblick schräg in den selben Sargraum desselben Bestattungsfahrzeugs, jedoch von einer Seitentür aus gesehen, wobei drei unterschiedliche Wandabschnitte aus derselben Sandwichplatte gebildet aneinander grenzen, und
- Fig. 4: einen Blick durch dieselbe Seitentür auf die so genannte B-Säule des Bestattungsfahrzeugs.

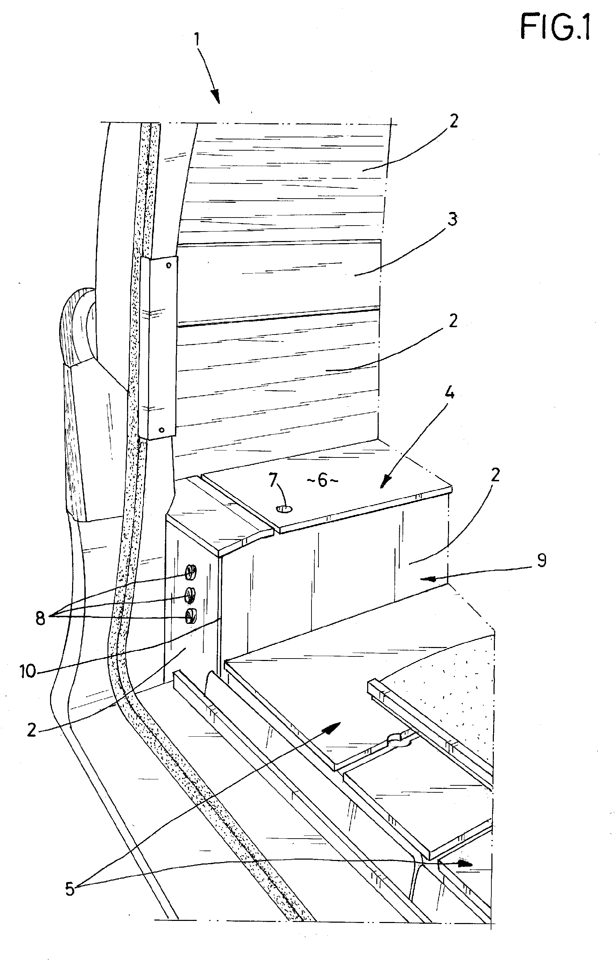

In den Zeichnungen ist mit 1 insgesamt ein Bestattungsfahrzeug bezeichnet. Fig. 1 zeigt einen Blick durch die geöffnete Heckklappe in den Sargraum des Bestattungsfahrzeugs 1. Dabei sind seitliche Wandabschnitte 2 erkennbar, die durch eine Lichtleiste 3 voneinander getrennt sind und welche als Seitenwände den Sargraum verkleiden. Ein Ladeboden im Sargraum wird durch mehrere Bahnen 4 und 5 gebildet, wobei äußere fest stehende Bahnen 4 vorgesehen sind und zwei bewegliche mittlere Bahnen 5, die in Fig. 1 in ihrer abgesenkten Stellung dargestellt sind, aus der sie angehoben werden können, um gemeinsam mit den beiden äußeren fest stehenden Bahnen 4 eine durchgängige Ladefläche zu schaffen.

Abschnitte der äußeren Bahnen 4 sind dabei als Klappe 6 eines Staufachs angeordnet, wobei diese Klappe mittels einer Grifföffnung 7 gehandhabt werden kann.

Unterhalb der fest stehenden Bahn 4 ist ein weiterer aufrecht verlaufender Wandabschnitt 2 vorgesehen, der durch eine Sandwichplatte gebildet wird. Dieser Wandabschnitt 2 grenzt im 90°-Winkel an einen rückwärtigen Wandabschnitt 2, der mehrere Steuerungselemente 8 enthält, beispielsweise Bedientasten, Kontrollleuchten o. dgl., die zur Steuerung der beweglichen Bahnen 5 vorgesehen sind. Die beiden Wandabschnitte 2 unterhalb der festen Bahn 4 werden durch eine einzige Sandwichplatte 9 geschaffen, wobei diese Sandwichplatte 9 dort, wo die beiden Wandabschnitte 2 aneinander grenzen, eine Kante 10 bildet, entlang welcher die Sandwichplatte 9 gekantet ist.

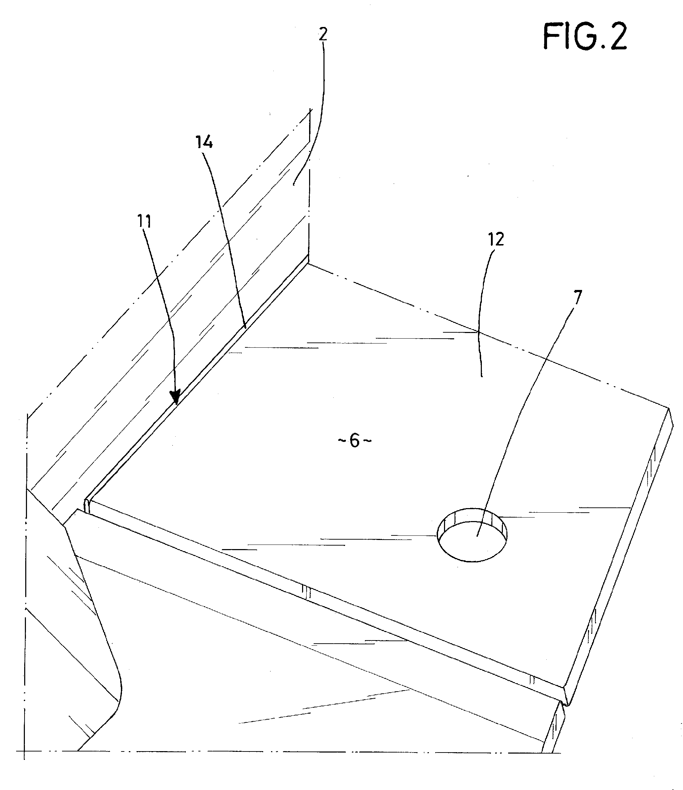

Fig. 2 zeigt in gegenüber Fig. 1 größerem Maßstab, dass die Klappe 6 ebenfalls aus einer Sandwichplatte gebildet ist, wobei dort, wo die Klappe 6 an den darüber befindlichen Wandabschnitt 2 angrenzt, ein Scharnier 11 erkennbar ist. Im Bereich dieses Scharniers 11 ist eine Oberflächenschicht, welche die Sichtseite der Klappe 6 bildet und die in Fig. 2 mit 12 gekennzeichnet ist, durch einen Fräsvorgang entfernt worden, so dass entlang der Linie des Scharniers 11 ein Kern 14 der betreffenden Sandwichplatte erkennbar ist. Die zur Schaffung der Klappe 6 verwendete Sandwichplatte 9 verläuft nicht von der Klappe 6 zu dem sich daran nach oben anschließenden Wandabschnitt 2, sondern entlang dem Scharnier 11 abwärts nach unten, und mit ihrem dem Scharnier 11 gegenüberliegenden freien Ende ruht die Klappe 6 auf dem darunter befindlichen Wandabschnitt 2 auf, der, wie aus Fig. 1 ersichtlich ist, durch die Sandwichplatte 9 gebildet ist bzw. auf einer rahmenartigen Tragkonstruktion, an welcher auch die Sandwichplatte 9 festgelegt ist.

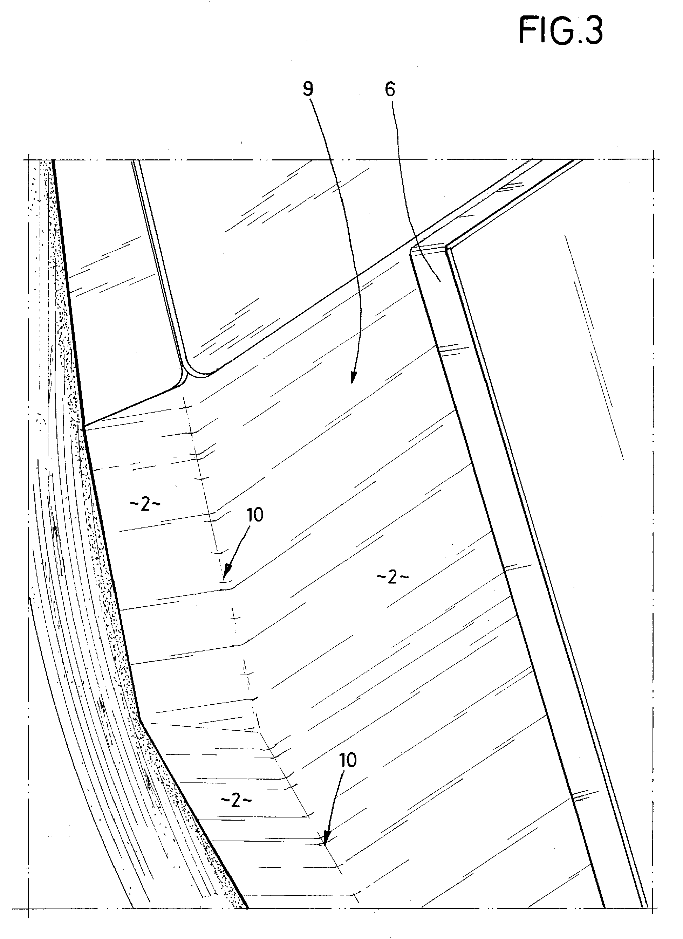

Fig. 3 zeigt auf der gegenüberliegenden Fahrzeugseite oberhalb der dort vorgesehenen festen Bahn 4 drei Wandabschnitte 2, die gemeinsam aus ein und derselben Sandwichplatte 9 hergestellt sind, wobei es sich um eine gleichartige, jedoch zweite Sandwichplatte 9 und nicht um die aus Fig. 1 ersichtliche Sandwichplatte 9 handelt.

Der großflächige Wandabschnitt 2 der Fig. 3 verläuft dabei entlang von zwei mit einem gewissen Biegeradius gekanteten Kanten 10 in einen jeweils schmaleren Wandabschnitt 2 über, wobei die beiden Kanten 10 selbst winklig aneinander grenzen, so dass auch die beiden schmaleren Wandabschnitte 2 in einem Winkel aneinander angrenzen, und zwar entlang einer schmalen, praktisch unsichtbaren Trennfuge.

In Fig. 3 ist weiterhin ersichtlich, dass auch die zweite Bahn 4, also auf der von Fig. 1 gegenüberliegenden Seite des Bestattungsfahrzeugs, mit einer Klappe 6 versehen ist, die auf die gleiche Weise scharnierbeweglich ausgestaltet ist wie anhand von Fig. 1 und 2 erläutert.

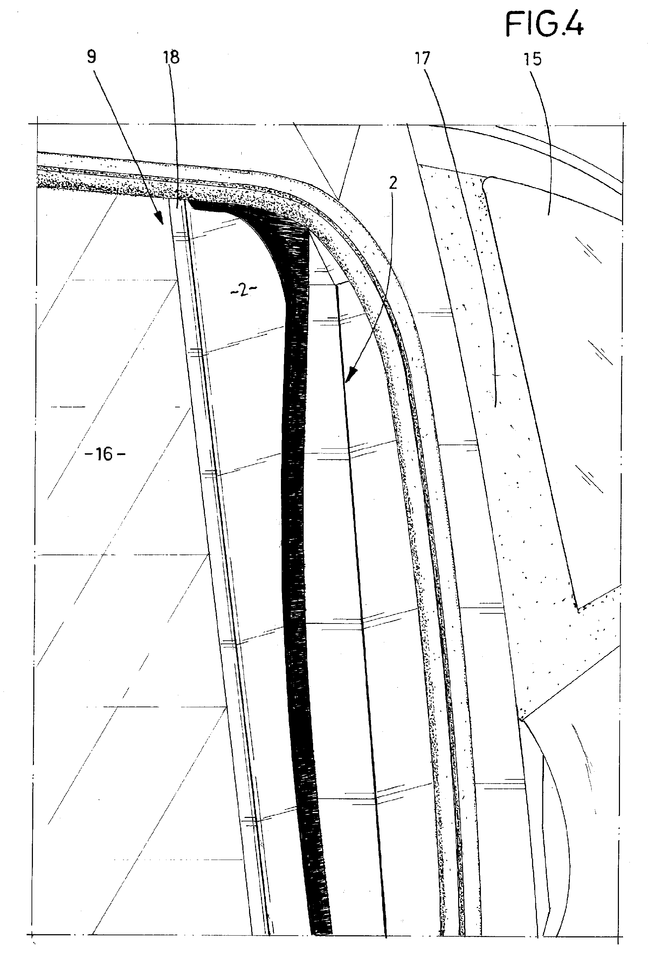

Während Fig. 3 den Blick durch eine Seitentür nach hinten in den Sargraum darstellt, ist anhand von Fig. 4 der Blick durch dieselbe Seitentür nach vorn, also zu einer Fahrerkabine 15 hin dargestellt. Eine Stirnwand 16 begrenzt den Sargraum nach vorn hin, der Übergang von dieser Stirnwand 16 zu einer B-Säule 17 des Bestattungsfahrzeugs 1 hin wird durch eine weitere Sandwichplatte 9 geschaffen, die etwa Z-förmig verläuft: Sie bildet eine schmale Einfassleiste 18, mit welcher sie die Stirnwand 16 am Rand einfasst. Von dort aus erstreckt sich die Sandwichplatte 9 nahezu im rechten Winkel nach vorn in Richtung zur Fahrerkabine 15 hin, und auf Höhe der B-Säule 17 ist die Sandwichplatte 9 erneut um etwa 90° gebogen, so dass sie nun, annähernd parallel zu der Einfassleiste 18, bis zur B-Säule 17 verläuft, so dass seitlich neben der Stirnwand 16 eine Art Aufnahmetasche geschaffen wird, in welche die Seitentür in ihrem geschlossenen Zustand eintauchen kann. Abgesehen von der Einfassleiste 18 bildet die Sandwichplatte 9 gemäß Fig. 4 also zwei Wandabschnitte des Innenausbaus, so dass durch Verwendung eines einzigen Bauteils, nämlich der Sandwichplatte 9, die Stückelung mehrerer schmaler, ansonsten erforderlicher Platten und deren Verbindung mittels spezieller Profilleisten erübrigt worden ist.

## Patentansprüche

1. Innenausbau im Sargraum eines Bestattungsfahrzeugs (1), mit mehreren aufrecht und liegend verlaufenden, im Wesentlichen planen Wandabschnitten (2),
wobei wenigstens zwei Wandabschnitte (2) im Winkel zueinander angeordnet sind und, eine Kante (10) des Innenausbaus bildend, entsprechend winklig aneinander grenzen,
**dadurch gekennzeichnet,**
**dass** die Wandabschnitte (2) gemeinsam aus einer Sandwichplatte (9) gebildet sind,
wobei auf der zum Inneren des Sargraums gerichteten, als Sichtseite bezeichneten Seite der Sandwichplatte (9) eine Oberflächenschicht (12) aus Metall vorgesehen ist,
und die Sandwichplatte (9) eine mit der Oberflächenschicht (12) verbundene, als Kern (14) bezeichnete Schicht aus Kunststoff aufweist,
und wobei entlang der Kante (10) und auf der von der Oberflächenschicht (12) abgewandten Seite der Sandwichplatte (9) eine Fräslinie verläuft.

2. Innenausbau nach Anspruch 1,
**dadurch gekennzeichnet,**
**dass** die Sandwichplatte (9) eine zweite Oberflächenschicht aus Metall aufweist,
die auf der von der Sichtseite abgewandten Seite des Kerns (14) angeordnet ist,
und **dass** die Fräslinie sich durch die zweite Oberflächenschicht erstreckt.

3. Innenausbau nach Anspruch 2,
**dadurch gekennzeichnet,**
**dass** die Fräslinie sich bis in den Kern (14) hinein erstreckt.

4. Innenausbau nach Anspruch 3,
**dadurch gekennzeichnet,**
**dass** der Kern (14) im Bereich der Fräslinie eine verbleibende, reduzierte Materialstärke aufweist.

5. Innenausbau nach einem der vorhergehenden Ansprüche,
**dadurch gekennzeichnet,**
**dass** die Sandwichplatte (9) zwei Oberflächenschichten aus Metall aufweist
und die beiden Oberflächenschichten (12) mit zwei einander gegenüberliegenden Fräslinien versehen sind und der Kern (14) aus einem elastischen, mehrfach biegbaren Kunststoff besteht, derart, dass er zwischen den beiden Fräslinien der beiden Oberflächenschichten (12) ein Scharnier (11) bildet
und die Sandwichplatte eine Klappe oder eine Tür des Innenausbaus bildet.

6. Innenausbau nach einem der vorhergehenden Ansprüche,
**dadurch gekennzeichnet,**
**dass** wenigstens eine Oberflächenschicht (12) aus Aluminium besteht.

7. Innenausbau nach einem der vorhergehenden Ansprüche,
**dadurch gekennzeichnet,**
**dass** der Kern (14) aus Polyethylen besteht.

8. Innenausbau nach einem der vorhergehenden Ansprüche,
**dadurch gekennzeichnet,**
**dass** die Sandwichplatte (9) mit mehreren Fräslinien versehen ist und einen konkav oder konvex gewölbten Verlauf aufweist,
und **dass** diese Wölbung der Sandwichplatte (9) innerhalb einer größeren Fläche des Innenausbaus angeordnet ist, derart, dass in dieser Fläche ein Vorsprung oder eine Einbuchtung geschaffen ist.

9. Innenausbau nach Anspruch 8,
**dadurch gekennzeichnet,**
**dass** die Wölbung der Sandwichplatte (9) als Einbuchtung in der größeren Fläche ausgestaltet ist und dass eine entfernbare, die Einbuchtung verdeckende Abdeckung vorgesehen ist.

10. Innenausbau nach Anspruch 8 oder 9,
**dadurch gekennzeichnet,**
**dass** die Einbuchtung in einer Trennwand angeordnet ist, welche den Sargraum des Bestattungsfahrzeugs nach vorn, zu einer Fahrerkabine hin, begrenzt.

## Claims

1. Interior construction in the coffin compartment of a hearse (1) comprising several substantially flat wall sections (2) running vertically and horizontally, where at least two wall sections (2) are arranged at an angle to one another and correspondingly adjoin one another forming an edge (10) of the interior construction,
**characterised in that** all the wall sections (2) are formed of a composite board (9), where a surface layer (12) of metal is provided on the inside or visible side of the composite board (9) facing towards the inside of the coffin compartment, and the composite board (9) has a layer of plastic, described as the core (14), which is joined to the surface layer (12), and where a milled line runs along the edge (10) and on the side of the composite board (9) facing away from the surface layer (12).

2. interior construction in accordance with claim 1, **characterised in that** the composite board (9) has a second surface layer of metal which is arranged on the side of the core (14) facing away from the visible side and that the milled line extends through the second surface layer.

3. interior construction in accordance with claim 2, **characterised in that** the milled line extends into the core (14).

4. Interior construction in accordance with claim 3, **characterised in that** the thickness of the remaining material of the core (14) is reduced in the area of the milled line.

5. interior construction in accordance with any of the preceding claims, **characterised in that** the composite board (9) has two surface layers of metal and the two surface layers (12) have two milled lines opposite one another, and the core (14) consists of a plastic material which is multiply elastically pliable such that it forms a hinge (11) between the two milled lines of the two surface layers (12) and the composite board forms a flap or a door of the interior construction.

6. interior construction in accordance with any of the preceding claims, **characterised in that** at least one surface layer (12) is made of aluminium.

7. interior construction in accordance with any of the preceding claims, **characterised in that** the core (14) is made of polyethylene.

8. Interior construction in accordance with any of the preceding claims, **characterised in that** the composite board (9) has several milled lines and is curved to form a concave or convex shape and that this curve in the composite board (9) extends over a larger part of the surface of the interior construction in such a way that a projection or a recess is formed in this surface.

9. Interior construction in accordance with claim 3, **characterised in that** the curve in the composite board (9) takes the form of a recess in the larger surface and that a removable cover is provided to fit over this recess.

10. Interior construction in accordance with claim 8 or claim 9, **characterised in that** the recess is formed in a partition wall separating the coffin compartment of the hearse from the driver's compartment in front.

## Revendications

1. Aménagement à l'intérieur du compartiment pour cercueil d'un véhicule d'enterrement (1), avec plusieurs segments de paroi (2) essentiellement plats et présentant un tracé vertical et horizontal, sachant qu'au moins deux segments de paroi (2) sont agencés à angle droit et que, formant un bord (10) de l'aménagement intérieur, ils aboutissent selon un angle correspondant l'un contre l'autre,
**caractérisé en ce que** les segments de paroi (2) sont formés ensemble à partir d'un panneau en sandwich (9), sachant que sur le côté dit « côté apparent » du panneau en sandwich (9) et qui regarde vers l'intérieur du compartiment pour cercueil, est prévue une couche superficielle (12) en métal et que le panneau en sandwich (9) présente une couche en matière plastique appelée « âme » (14) et reliée avec la couche superficielle (12), et sachant que le long de la bordure (10) et sur le côté du panneau en sandwich (9) ne regardant pas la couche superficielle (12) se trouve le tracé d'une ligne fraisée.

2. Aménagement intérieur selon la revendication 1, **caractérisé en ce que** le panneau en sandwich (9) présente une seconde couche superficielle en métal agencée sur le côté de l'âme (14) ne regardent pas le côté apparent, et que la ligne fraisée s'étend à travers la deuxième couche superficielle.

3. Aménagement intérieur selon la revendication 2, **caractérisé en ce que** la ligne fraisée s'étend jusque dans l'âme (14).

4. Aménagement intérieur selon la revendication 3, **caractérisé en ce que** l'âme (14) présente, dans la zone de la ligne de fraisage, une épaisseur de matériau restante réduite.

5. Aménagement intérieur selon l'une des revendications précédentes, **caractérisé en ce que** le panneau en sandwich (9) présente deux couches superficielles en métal et que les deux couches superficielles (12) sont dotées de deux lignes fraisées se faisant face, et que l'âme (14) se compose d'une matière plastique élastique pouvant être plusieurs fois coudée de sorte qu'entre les deux lignes fraisées des deux couches superficielles (12) elle forme une charnière (11) et que le panneau en sandwich forme une trappe ou une porte de l'aménagement intérieur.

6. Aménagement intérieur selon l'une des revendications précédentes, **caractérisé en ce qu'**au moins une couche superficielle (12) est en aluminium.

7. Aménagement intérieur selon l'une des revendications précédentes, **caractérisé en ce que** l'âme (14) est en polyéthylène.

8. Aménagement intérieur selon l'une des revendications précédentes, **caractérisé en ce que** le panneau en sandwich (9) est doté de plusieurs lignes fraisées et qu'il présente un tracé concave ou convexe et **en ce que** cette courbure du panneau en sandwich (9) est agencée à l'intérieur d'une surface plus importante de l'aménagement intérieur, de sorte que dans cette surface est créé une saillie ou un creux.

9. Aménagement intérieur selon la revendication 8, **caractérisé en ce que** la courbure du panneau en sandwich (9) est configurée comme creux dans la plus grande surface et qu'un couvercle amovible recouvrant le creux est prévu.

10. Aménagement intérieur selon la revendication 8 ou 9, **caractérisé en ce que** le creux est agencé dans une paroi séparatrice qui délimite vers l'avant, en direction d'un habitacle de conducteur, le compartiment pour cercueil du véhicule d'enterrement.
